# EUROPEAN PATENT APPLICATION

(11) **EP 2 009 390 A1**
(43) Date of publication of application: **31.12.2008**
(21) Application number: 07110994.6
(22) Date of filing: 25.06.2007
(51) Int. Cl.: G01B 11/02, G01B 11/04, G01B 21/02, G01B 21/06

(54) **Measuring system**

(71) Applicant: Nederlandse Organisatie voor Toegepast- Natuurwetenschappelijk Onderzoek TNO, 2628 VK Delft (NL)
(72) Inventor: Draaisma, Folkert, 2628 CK Delft (NL)
(74) Representative: van Loon, C.J.J.

(57) **Abstract**

System for measuring or monitoring the size in one direction (y) of at least one object (1, 1'), located at or moving along a predetermined straight line (x). The system comprises an image sensor (2) as well as a light source (8) for illuminating at least part of the at least one object (1, 1'). The illumination light is transferred via a first optical path exclusively lying within a first plane (11), while the light which is reflected by the at least object (1, 1') is transferred via a second optical path which exclusively lies within a second plane (3). Both planes (3, 11) are placed such that their intersection line coincides with said predetermined straight line (x) at which said at least one object is located or moving along. Preferably, the second optical path is a telecentric optical path and, moreover, diverges from said predetermined straight line (x); the orientation of the detection plane of the sensor (2) preferably complies with the "Scheimpflug"-rule. The system may be applied for measuring the thickness of contact wires (12) of trains etc. wherein those contact wires are guided by a pantograph (13) and the relevant system components are build together and mounted underneath the pantograph. Moreover, the system may be used for particle monitoring at any surface (14), e.g. in "clean room" areas.

## Description

### Field of the invention

The invention refers to a system for measuring or monitoring the size in one dimension (y) of at least one object located within an area extending along a second dimension (x), the system comprising a sensor. The system may - not exclusively - e.g. be used for monitoring the thickness (height) of contact wires of trains etc. but may also be used for a lot of quite different application like e.g. particle (e.g. dust) monitoring of clean surfaces in "clean room" applications with the manufacture of microelectronic or optical components.

There are some problems to solve when looking for a system as indicated above:
- Preferably, several objects lying behind each other (spread over the x-axis) have to be measured individually;
- Preferably, a near by and a far off object (or an object moving along the x-axis) has to be projected to the sensor with the same magnification, so that their projections to the sensor reflect their real sizes (in the direction of the y-axis) without any need for scaling;
- Preferably, the projection of the object to the sensor is sharp at any position of the object on the x-axis;
- Preferably, if the object(s) to be measured are illuminated, solely light which is reflected by the objects must be detected, excluding light which is reflected by e.g. the object's background.

### Summary of the invention

The present invention aims to fill the needs as outlined above. According to the invention a system is presented for measuring or monitoring the size in one direction (y) of at least one object located at or moving along a predetermined straight line (x), using optical transfer means and a sensor which is sensitive for light which is reflected by said at least one object, comprises one or any combination of next provisions:
- To provide that a near by and a far off object (or an object moving along the x-axis) will be projected to the sensor always having the same magnification, so that their projections to the sensor reflect their real sizes (in the direction of the y-axis) without any need for scaling, it is preferred that optical path between the sensor and the object is a telecentric optical path. Such a telecentric optical path is defined as a path, comprising one or more lenses and/or mirrors, causing that the chief rays for all points across the object or image are collimated. For example, telecentricity occurs when the chief rays are parallel to the optical axis, in object and/or image space. Another way of describing telecentricity is to state that the entrance pupil and/or exit pupil of the system is located at infinity. (© Wikipedia).
- To be capable to detect several objects lying behind each other (spread over the x-axis) individually it is preferred that the optical path between the object (or objects) and the sensor is provided such that, in the plane through the x-axis, the y-axis and the sensor, the (collimated) chief rays between the object and the sensor extend under an angle to the y-axis which is substantially unequal to zero: in other words, the chief rays from the object diverge from the x-axis.
- To provide that the projection of the object to the sensor is sharp at any position of the object on the x-axis, it is preferred to apply the "Scheimpflug"-principle. The Scheimpflug principle is a geometric rule that describes the orientation of the plane of focus of an optical system (such as a camera) when the lens plane is not parallel to the image plane. It is commonly applied to the use of camera movements on a view camera. The principle is named after Austrian army captain Theodor Scheimpflug, who used it in devising a systematic method and apparatus for correcting perspective distortion in aerial photographs (© Wikipedia; see also http://en.wikipedia.org/wiki/Scheimpflug principle, GB Patent No. 1196 and GB Patent No. 1139).
- It may be preferred that the object the height of which has to be measured, is illuminated by a source of visible or invisible (e.g. infrared or ultraviolet) light. To achieve that solely the light reflected by the object(s) is detected by the sensor, excluding light which may reflected by e.g. the object's background or environment, the illumination is transferred via an optical path exclusively lying within a first plane, while the reflected light is transferred via an path which exclusively lies within a second plane, where both planes are placed such that their intersection line coincides with said predetermined straight line (x) at which said at least one object is located or moving along.

Below a not restrictive, illustrated exemplary embodiment of the invention will be discussed.

### Exemplary Embodiment

Figure 1 shows schematically an exemplary embodiment of a preferred system according to the invention.
Figure 2 shows schematically the application of the configuration shown in figure 1 for measuring the thickness of contact wires of trains etc.
Figure 3 shows schematically the application of the configuration shown in figure 1 for the detection of pollutants, like dust etc. on a "clean room" surface e.g. in the area of the manufacture of microelectronic or optical components.

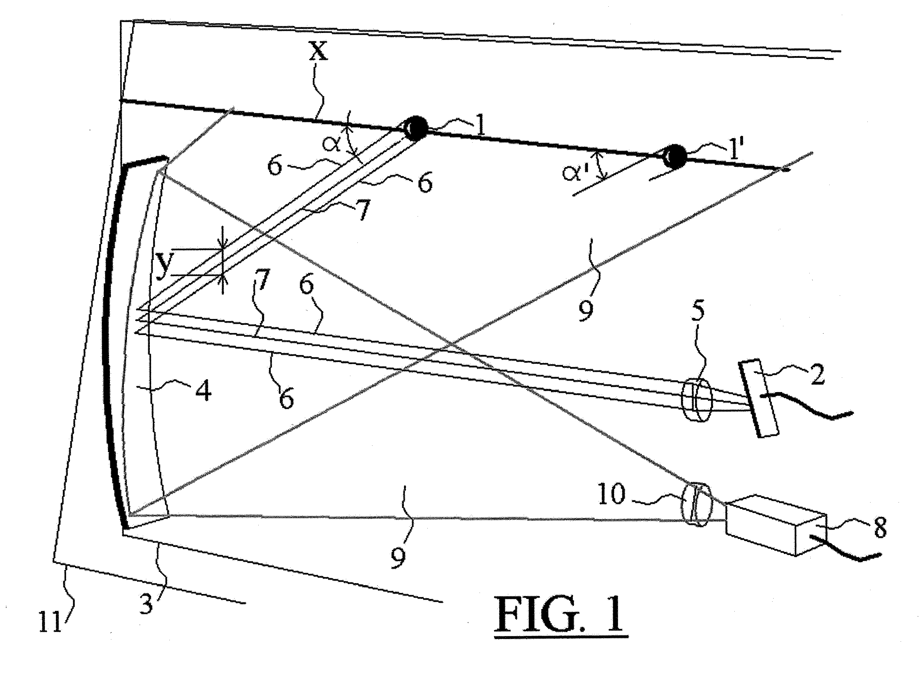

In figure 1 a system is presented for measuring or monitoring the size s in one direction y of at least one object 1 located at any position of or moving along a predetermined straight line x, using optical transfer means and a sensor 2 which is sensitive for light which is reflected by object 1.
Figure 1 shows schematically the preferred provisions as outlined above.

To provide that a near by object 1 and a far off object 1' (or an object 1 moving along the x-axis) will be projected to the sensor 2 always having the same magnification, so that their projections to the sensor 2 reflect their real sizes (in the direction of the y-axis) without any need for scaling (e.g. in additional processing means), in figure 1 the optical path between the sensor 2 and the object 1 is a telecentric optical path. Such a telecentric optical path is defined as a path, comprising one or more lenses and/or mirrors, causing that the chief rays for all points across the object or image are collimated. As can be seen in figure 1, the telecentricity is achieved by providing, by means of the curved shape of a mirror 4 and/or the features of an objective 5, that the chief rays 6 are parallel to each other and to the optical axis 7.

To be capable to detect several objects (e.g. 1 and 1') lying behind each other (spread over the x-axis) individually in figure 1 the optical path between the objects 1, 1' and the sensor 2 is provided such that, in the (detection) plane 3 through the x-axis, the y-axis and the sensor 2, the (collimated) chief rays 6 between the objects 1, 1' and the sensor extend under angles α, α' to the x-axis which angles α, α' are substantially unequal to zero: in other words, the chief rays from the object diverge under an angle (viz. angles α, α') from the x-axis.

To provide that the projection of the object 1 to the sensor 2 is sharp at any position of the object on the x-axis, the "Scheimpflug"-principle has been applied in the configuration of figure 1: the detection plane of sensor 2 is not perpendicular to the optical axis 7.

In figure 1 the objects 1, 1' the height of which has to be measured, is illuminated by a source of visible or invisible (e.g. infrared or ultraviolet) light, formed by a laser 8. To achieve that solely the light reflected by the object(s) is detected by the sensor, thereby excluding light which may reflected by e.g. the object's background or environment, the illumination is transferred via an optical path 9, provided by the laser 8 and an optical slit 10, exclusively lying within an illumination plane 11. The reflected light - reflected by the illuminated object(s) 1, 1' is transferred via a path which exclusively lies within a detection plane 3: stated more precisely, only reflections which are transferred via the (narrow) optical path lying within plane 3, will be detected by sensor 2 Both planes 3 and 11 are placed such that their intersection line coincides with the straight line x at which the objects 1, 1' are located or moving along.

By the configuration shown in figure 1 all aims of this invention are met:
- Several objects 1, 1' lying behind each other can be measured individually;
- Nearby and far-off objects 1, 1' are projected to the sensor with the same magnification;
- The projections of the objects 1, 1' to the sensor are sharp at any position of the objects on the x-axis;
- Solely light which is reflected by the (illuminated) objects is detected, excluding any other light.

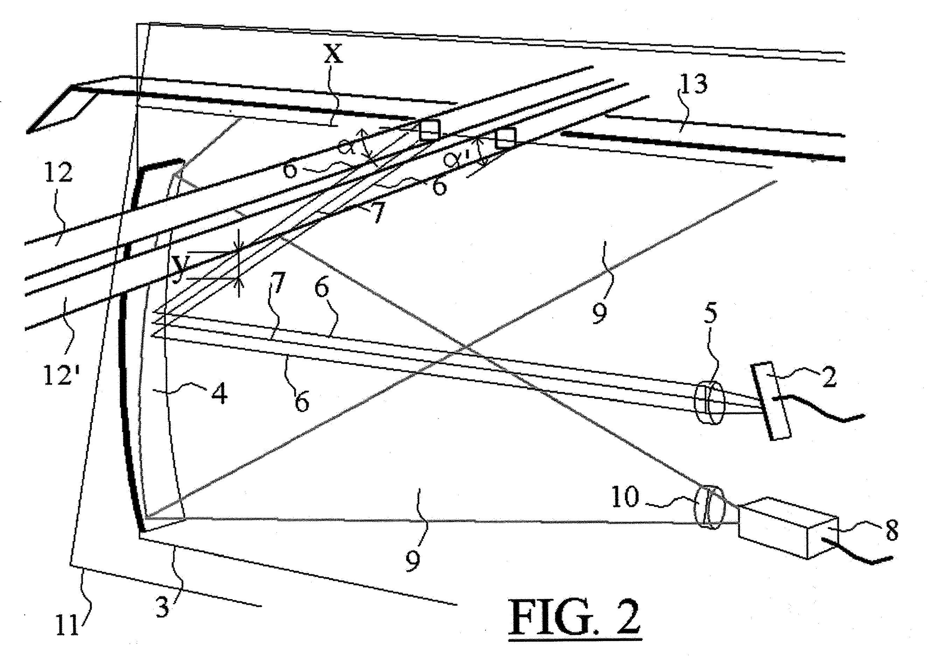

Figure 2 shows schematically a device for measuring the thickness of contact wires of trains etc., based on the configuration as outlined in figure 1. In figure 2 the diameter of contact wires 12, 12' can be measured using the same configuration as outlined in figure 1. The complete configuration shown in figure 2 may - in the form of a well constructed and well accommodated measuring device - be mounted underneath a measuring pantograph 13, mounted on a measuring rail vehicle. The (double) contact wires 12 are supported and guided by the pantograph 13, keeping the wires in any position along the x-axis.

As an example the contact wires 12 may have a square cross-section. The size Y, which is measured via the sensor 2, has a vertical component (the wire's height) and a horizontal component (the wire's width). When using rectangular or square wires, the wire wear manifests itself by a decrease of the height, which will influence directly the value of Y. When using wires having e.g. a more or less round cross-section, the value of Y may not vary much, but the wear mainly will influence the horizontal component: wear will flatten the underside of the wire, resulting in an increase of the horizontal surface, which - due to color and/or luminance differences compared with the remaining of the detected image.

The diameters of both contact wires 12, 12' - lying side by side (spread over the x-axis) - can be measured simultaneously due to the fact that the rays 6 from both objects diverge under an angle (α, α') from the x-axis, as has been explained in the preceding.

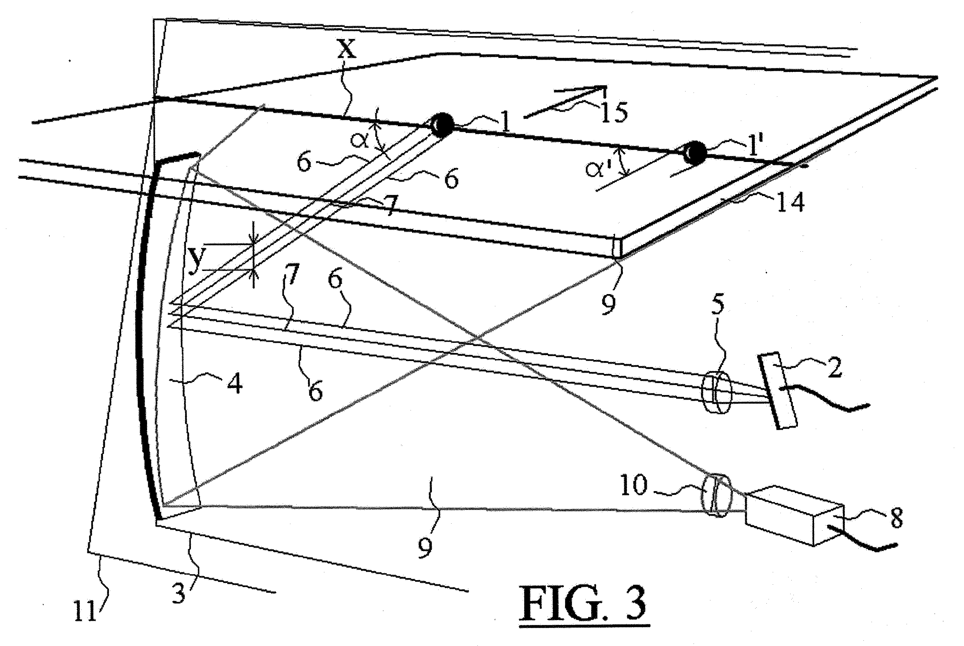

Figure 3 shows schematically an application for detecting pollutant particles 1, 1' which may reside on a "clean room" surface 14 moving into the direction of arrow 15. The presence - and size - of such particles may be detected by a configuration as outlined in figure 1. It is noted that where in this figure 3 both the illumination and the reflection rays come from below, while the particles may be located upside, it is presumed that the surface 14 (e.g. a plate) is transparent. Persons skilled in the art will, however, will be able to make a construction which is similar to the construction as illustrated in figure 3, however amended such that the illumination and the reflection rays will come from above, viz. by mirroring all relevant components relative to the surface 14. By doing so the surface 14 does not need to be transparent.

## Claims

1. System for measuring or monitoring the size in one direction (y) of at least one object (1, 1') located at or moving along a predetermined straight line (x), the system comprising an image sensor (2) as well as a light source (8) for illuminating at least part of the at least one object (1, 1') via means which provide that the illumination light is transferred via a first optical path exclusively lying within a first plane (11), while the light which is reflected by the at least object (1, 1') is transferred via a second optical path which exclusively lies within a second plane (3), where both planes (3, 11) are placed such that their intersection line coincides with said predetermined straight line (x) at which said at least one object is located or moving along.

2. System according to claim 1, wherein said second optical path, between the sensor (2) and the at least one object (1, 1'), is a telecentric optical path.

3. System according to claim 1, wherein said second optical path, between the at least one object (1, 1') and the sensor (2), is provided such that the optical axis of the path from the at least one object (1, 1') diverges from said predetermined straight line (x).

4. System according to claim 1, wherein the orientation of the detection plane of the sensor (2) to the direction of the optical path complies with the "Scheimpflug"-rule.

5. System for measuring the thickness of contact wires (12) of trains etc. according any of claims 1 - 4, wherein those contact wires are guided by a pantograph (13) and the relevant system components are build together and mounted underneath the pantograph.

6. System for particle monitoring a surface (14) according any of claims 1 - 4.
